(19) Europäisches Patentamt
European Patent Office
Office européen des brevets

(11) EP 4 082 340 A1

(12) **EUROPEAN PATENT APPLICATION**
published in accordance with Art. 153(4) EPC

(43) Date of publication:
**02.11.2022 Bulletin 2022/44**

(21) Application number: **20906206.6**

(22) Date of filing: **11.12.2020**

(51) International Patent Classification (IPC):
***A01P 13/00*** *(2006.01)* ***A01N 43/80*** *(2006.01)*
***A01N 25/30*** *(2006.01)* ***A01N 47/36*** *(2006.01)*

(52) Cooperative Patent Classification (CPC):
**A01N 25/30; A01N 43/80; A01N 47/36**

(86) International application number:
**PCT/JP2020/046361**

(87) International publication number:
**WO 2021/131811 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2019 JP 2019237589**

(71) Applicant: **Ishihara Sangyo Kaisha, Ltd.**
**Osaka-shi, Osaka 550-0002 (JP)**

(72) Inventors:
- **SUGANUMA Taketo**
  **Osaka-shi, Osaka 550-0002 (JP)**
- **TANIDA Yasutsune**
  **Osaka-shi, Osaka 550-0002 (JP)**
- **USUI Takuya**
  **Osaka-shi, Osaka 550-0002 (JP)**

(74) Representative: **Hartz, Nikolai**
**Wächtershäuser & Hartz**
**Patentanwaltspartnerschaft mbB**
**Weinstrasse 8**
**80333 München (DE)**

# (54) METHOD FOR PROVIDING BENEFIT TO HEALTH AND/OR GROWTH OF USEFUL PLANT

(57) The object of the present invention is to find out a component which improves effects of agriculturally active ingredients, which is effective to contribute to reduction of the environmental load even in a small amount, in addition to bringing benefits to the health and/or growth of useful plants, by maximizing the effects of nicosulfuron, reducing phytotoxicity which is an undesired effect on the useful plants, etc.

When nicosulfuron and isoxadifen-ethyl are used in combination, by adding a specific surfactant, benefits can be brought to the health and/or growth of useful plants even if the addition amount is remarkably smaller than the amount of the conventional adjuvant used.

EP 4 082 340 A1

## Description

TECHNICAL FIELD

The present invention relates to a method which brings benefits to the health and/or growth of useful plants.

BACKGROUND ART

Agriculturally active ingredients are used usually with various additives so as to maximize their effects. Among such additives, components so-called adjuvants are sometimes used together with the agriculturally active ingredients for the purpose of improving the effects of the agriculturally active ingredients. However, use of adjuvants together with the agriculturally active ingredients not only enhances the effects of the agriculturally active ingredients but also enhances undesired effects on the useful plants resulting from the agriculturally active ingredients and may cause a disadvantage for the health/growth of the useful plants. Such a disadvantage tends to be more promoted, for example, when the useful plants growth environment is at high temperature.

For example, in the case of nicosulfuron as one of herbicidally active ingredients, as a technique to reduced so-called phytotoxicity which is an undesired effect on the useful plants resulting from its use, use in combination with a safener has been proposed (for example, Patent Document 1). However, Patent Document 1 failed to clearly describe which safener had practical effect in Examples, and failed to discuss the influence of the use in combination with adjuvants over the health/growth of useful plants. Further, as an example of a technique to practically use nicosulfuron in combination with a safener, a product containing isoxadifen-ethyl as a safener together with nicosulfuron (trade name: ACCENT (registered trademark) Q) in on the market in U.S. (Non-Patent Document 1). On the label of the product, use in combination with a predetermined amount of adjuvants such as a crop oil concentrate (COC), a modified seed oil (MSO) or a nonionic surfactant (NIS) or nitrogen fertilizers is recommended, but specific components of the nonionic surfactant are not described.

In recent years, along with increasing demands for reduction of the environmental load, proper use of agriculturally active ingredients and fertilizer components imposed to the environment and reduction of their use have been required. Further, some of additives used in this technical field have low decomposability in the environment, and reduction of their use or a shift to highly decomposable components has been desired. As described above, reduction of the environmental load not only from the viewpoint of the agriculturally active ingredients but also from the viewpoint of the additives is important.

PRIOR ART DOCUMENTS

PATENT DOCUMENT

Patent Document 1: Chinese Patent Application CN105875602A

NON-PATENT DOCUMENT

Non-Patent Document 1: DUPONT, DuPont Accent Q herbicide, online, searched on December 18, 2019, URL: https://s3-us-west-1.amazonaws.com/www.agrian.com/pdfs/DuPont_Accent_Q_Herbicide_Label1a.pdf

DISCLOSURE OF INVENTION

TECHNICAL PROBLEM

Accordingly, it is necessary to find out a component which improves effects of agriculturally active ingredients, which is effective to contribute to reduction of the environmental load even in a small amount, in addition to bringing benefits to the health and/or growth of useful plants, by maximizing the effects of nicosulfuron, reducing phytotoxicity which is an undesired effect on the useful plants, etc.

SOLUTION TO PROBLEM

The present inventors have conducted extensive studies to achieve the above object and as a result, found that in use of nicosulfuron and isoxadifen-ethyl in combination, selecting a specific surfactant brings benefits to the health and/or growth of useful plants even though its addition amount is remarkably smaller than the amount of conventional adjuvants used. More specifically, as described in the above Non-Patent Document 1, the conventionally recommended

amount (concentration) of various adjuvants added to a spray solution is, in the case of a crop oil concentrate (COC) or a modified seed oil (MSO) for example, 2 volume/volume percent (v/v%) in the case of a large amount or 0.5 volume/volume percent (v/v%) in the case of a small amount, and the present inventors have conducted extensive studies on the types of the adjuvants and found that a specific surfactant, used in combination with isoxadifen-ethyl, not only improves herbicidal effects of nicosulfuron but also reduces the phytotoxicity which is an undesired effect on useful plants, and brings benefits to the health and/or growth of the useful plants, even in a small addition amount. The amount of MSO added as represented by weight/volume percent, is 2 weight/volume percent in the case of a large amount or 0.5 weight/volume percent in the case of a small amount taking the specific gravity of the adjuvant being 1.

That is, the present invention provides a method which brings benefits to the health and/or growth of useful plants, which comprises:

(1) a step of preparing a spray solution containing at least

(a) nicosulfuron (referred to as component (a) in this specification),
(b) isoxadifen-ethyl (referred to as component (b) in this specification),
(c) one or more components selected from the group consisting of a polyoxyethylene alkyl ether phosphate or its salt, a polyoxyethylene alkylamine, a polyoxyethylene sorbitan fatty acid ester, a polyoxyethylene alkyl ether, a polyoxyethylene hydrogenated castor oil and a polyoxyethylene castor oil (referred to as component (c) in this specification), and
(d) water (referred to as component (d) in this specification),

so that the concentration of the component (c) in the spray solution is from 0.001 to 0.25 weight/volume percent; and
(2) a step of applying the spray solution prepared in the step (1) to useful plants or to a place where they grow, and an agricultural formulation comprising the above components (a) to (c) to be used for the method.

ADVANTAGEOUS EFFECTS OF INVENTION

The method of the present invention can bring benefits to the health and/or growth of useful plants in various growth environment of useful plants (for example at high temperature), can reduce the amounts of not only agriculturally active ingredients applied to the environment but also the additives, and thereby achieves further reduction of the environmental load.

DESCRIPTION OF EMBODIMENTS

The method of the present invention is a method which brings benefits to the health and/or growth of useful plants.

In the present invention, the "useful plants" mean plants useful in agricultural and horticultural fields. The plants useful in agricultural and horticultural fields include plants having, imparted by classical breeding methods, resistance to a herbicide (for example, a HPPD inhibitor such as isoxaflutole; an ALS inhibitor such as imazethapyr or thifensulfuron-methyl; an EPSP synthase inhibitor such as glyphosate; a glutamine synthase inhibitor such as glufosinate; an acetyl CoA carboxylase inhibitor such as sethoxydim; bromoxynil; dicamba; or 2,4-D). Further, the useful plants in the present invention include transgenic plants generated by gene modification. Examples of the transgenic plants include herbicide-resistant transgenic plants, noxious insect-resistant transgenic plants, transgenic plants relating to plant components, and phytopathogenresistant transgenic plants. Further, the useful plants of the present invention include stacked varieties having useful characters of such transgenic plants combined.

The useful plants in the present invention may, for example, be specifically corn, grass, turf, lawn, wheat, rice, sugar cane, banana, citrus, cacao, coconut, coffee, oil palm, olive, pome, stone fruit, tropical fruit, gum tree, tree nuts, tropical nuts, vine and grape, preferably corn. The corn may, for example, be more specifically field corn, sweet corn, popcorn, high lysine corn, waxy corn, white corn and other food grade corn hybrid.

In the present invention, the wording "brings benefits to the health and/or growth of useful plants" means to improve the growth (for example, height, weight, number of leaves, size of leaves, growth rate and rooting amount), the yield, the quality (for example, the content and composition of nutritious components, proteins, fatty acids and amino acids), etc. of the useful plants, by either one or both of (1) controlling weeds which have harmful effects on the health and/or growth of the useful plants; and (2) by reducing harmful effects on the health and/or growth of the useful plants caused by herbicides used in (1). Further, according to the present invention, the health and/or growth state of the useful plants are improved, whereby the resistance of the useful plants to biological stress and environmental stress to which the useful plants are exposed in their growth environment may be increased.

The method of the present invention comprises the following steps (1) and (2):

(1) a step of preparing a spray solution containing at least the component (a), the component (b), the component (c) and the component (d) so that the concentration of the component (c) in the spray solution is from 0.001 to 0.25 weight/volume percent; and

(2) a step of applying the spray solution prepared in the step (1) to useful plants or to a place where they grow.

The spray solution to be prepared in the step (1) in the method of the present invention is characterized by containing at least the component (a), the component (b), the component (c) and the component (d), in a concentration of the component (c) in the spray solution of from 0.001 to 0.25 weight/volume percent. Here, the "weight/volume percent" may sometimes be represented as "w/v%", and is the percentage of the component (c) in the spray solution calculated based on the weight of the component (c) and the volume of the spray solution. In the method of the present invention, the concentration of the component (c) in the spray solution is preferably from 0.005 to 0.2 weight/volume percent, more preferably from 0.01 to 0.15 weight/volume percent.

In the method of the present invention, as demonstrated in the after-described Examples, the concentration of the component (c) is from about 1/2 to about 1/10 of the amount of adjuvants recommended in Non-Patent Document 1 for example, and such reduction of the amount of the component used is achieved by selecting the specific component (c) described hereinafter.

The spray solution may be prepared by dilution with the component (d) so that the component (c) is contained at the above concentration, in accordance with the amount of water in the spray solution to be applied, that is, the predetermined spray volume. As an example, the spray volume is from 50 to 2,000 L, preferably from 70 to 1,500 L, more preferably from 100 to 1,000 L, per hectare. For example, in a case where 1,000 L of a spray solution is to be prepared, from 10 g to 2,500 g of the component (c) may be diluted with the component (d) into 1,000 L.

The component (c) in the present invention is one or more components selected from the group consisting of a polyoxyethylene alkyl ether phosphate or its salt, a polyoxyethylene alkylamine, a polyoxyethylene sorbitan fatty acid ester, a polyoxyethylene alkyl ether, a polyoxyethylene hydrogenated castor oil and a polyoxyethylene castor oil. The optimal range of the number of mols of ethylene oxide added in such a component (c) varies depending upon each component (c).

In the present invention, the polyoxyethylene alkyl ether phosphate or its salt means a polyoxyethylene alkyl ether monophosphate, a polyoxyethylene alkyl ether diphosphate or a polyoxyethylene alkyl ether triphosphate, or a salt thereof, and is represented, for example, by the following formula (I):

$$[R^1O\text{-}(CH_2CH_2O)_n]_x - \overset{\overset{\displaystyle O}{\|}}{P} - (O^-M^+)_y \qquad (I)$$

In the formula (I), $R^1$ is a linear, branched or cyclic, saturated or unsaturated $C_{8\text{-}20}$ alkyl (such as octyl, nonyl, decyl, undecyl, dodecyl, tridecyl or tetradecyl), n is an integer of from 1 to 20, x is an integer of from 1 to 3, y is an integer of from 0 to 2, the total of x and y is 3, $M^+$ is a hydrogen ion or a metal ion (such as an alkali metal ion of e.g. sodium or potassium), or $N(R^2)_4{}^+$ (wherein $R^2$ is H or a $C_{1\text{-}6}$ alkyl (such as methyl, ethyl, propyl, butyl, pentyl or hexyl) and respective $R^2$ may be the same or different). In a case where x is an integer of from 2 to 3, the respective $R^1$ may be the same or different, and in a case where y is 2, the respective $M^+$ may be the same or different.

The polyoxyethylene alkyl ether phosphate or its salt may, for example, be specifically a compound of the formula (I) wherein $R^1$ is a linear, branched or cyclic, saturated or unsaturated $C_{8\text{-}20}$ alkyl, preferably a $C_{8\text{-}18}$ alkyl, more preferably a $C_{8\text{-}13}$ alkyl. $M^+$ is a hydrogen ion or a metal ion (such as an alkali metal ion of e.g. sodium or potassium), or $N(R^2)_4{}^+$ (wherein $R^2$ is H or a $C_{1\text{-}6}$ alkyl) preferably a hydrogen ion or an alkali metal ion (for example, sodium ion), more preferably sodium ion. The average number of moles of ethylene oxide added in the polyoxyethylene alkyl ether phosphate or its salt is from 1 to 20 moles, more preferably from 1 to 10 moles, further preferably from 1 to 6 moles.

As the polyoxyethylene alkyl ether phosphate or its salt, commercial products may be used, and specific examples of the commercial products include NIKKOL DLP-10, NIKKOL DOP-8NV, NIKKOL DDP-2, NIKKOL DDP-4, NIKKOL DDP-6, NIKKOL DDP-8, NIKKOL DDP-10, NIKKOL TLP-4, NIKKOL TCP-5, NIKKOL TDP-2, NIKKOL TDP-6, NIKKOL TDP-8, NIKKOL TDP-10, etc. (manufactured by Nikko Chemicals Co., Ltd.); PLYSURF A212C, PLYSURF A215C, PLYSURF A208B, PLYSURF A219B, etc. (manufactured by DKS Co., Ltd.); SORPOL 7964, SORPOL 7965, PHOSPHANOL ED-200, PHOSPHANOL RA-600, PHOSPHANOL ML-220, PHOSPHANOL ML-240, PHOSPHANOL RD-510Y, PHOSPHANOL RS-410, PHOSPHANOL RS-610, PHOSPHANOL RS-710, PHOSPHANOL RL-210, PHOSPHANOL RL-310, PHOSPHANOL RB-410, PHOSPHANOL RS-610NA, PHOSPHANOL SC-6103, PHOSPHANOL RS-710M, PHOSPHANOL GB-520, PHOSPHANOL RD-720, etc. (manufactured by Toho Chemical Industry Co., Ltd.);

ADEKA COL PS-440E, ADEKA COL PS-509E, ADEKA COL PS-807, ADEKA COL PS-810, ADEKA COL PS-984, etc. (manufactured by ADEKA Corporation); and PHOSPHOLAN 5AP, PHOSPHOLAN PS-131, PHOSPHOLAN PS-220, PHOSPHOLAN PS-222, PHOSPHOLAN PS-236, PHOSPHOLAN PS-331, PHOSPHOLAN PS-810, PHOSPHOLAN PS-900, etc. (manufactured by AKZO NOBEL), but the commercial products are not limited thereto.

The polyoxyethylene alkyl ether phosphate or its salt is particularly preferably sodium polyoxyethylene alkyl ether phosphate.

In the present invention, the polyoxyethylene alkylamine means a compound having ethylene oxide added to an alkylamine. The alkylamine may, for example, be tallow amine, soy amine or cocoamine. The average number of moles of ethylene oxide added in the polyoxyethylene alkylamine is not particularly limited and is preferably from 5 to 20 moles, more preferably from 10 to 20 moles, further preferably about 15 moles.

The polyoxyethylene alkylamine may, for example, be specifically polyoxyethylene tallow amine, polyoxyethylene soy amine or polyoxyethylene cocoamine, and is preferably polyoxyethylene tallow amine.

As the polyoxyethylene alkylamine, commercial products may be used, and specific examples of the commercial products include polyoxyethylene tallow amines such as GenaminT-150, GenaminT-200, etc. (manufactured by CLARIANT); Ethomeen T-12, Ethomeen T-20, Ethomeen T-25, Ethomeen T-30, etc. (manufactured by AKZO NOBEL); SORPOL 7553, SORPOL 7409, etc. (manufactured by Toho Chemical Industry Co., Ltd.); Newkalgen D-3615T, etc. (manufactured by Takemoto Oil & Fat Co., Ltd.); Lutensol FA15T, etc. (manufactured by BASF); Amiet TD/27, etc. (manufactured by Kao Corporation); Terwet 3784, etc. (manufactured by HUNTSMAN); Toximul TA2, Toximul TA5, Toximul TA8, Toximul TA15, etc. (manufactured by Stepan); and Atlas G-3780, Cirrasol G-3780A, Lubrol PE, etc. (manufactured by Croda); polyoxyethylene soy amines such as SORPOL 7221, etc. (manufactured by Toho Chemical Industry Co., Ltd.); and Newkalgen D-3605, etc. (manufactured by Takemoto Oil & Fat Co., Ltd.); and polyoxyethylene cocoamine such as Lutensol FA12K, etc. (manufactured by BASF), but the commercial products are not limited thereto.

The polyoxyethylene alkylamine is particularly preferably a polyoxyethylene tallow amine.

In the present invention, the polyoxyethylene sorbitan fatty acid ester means a compound having ethylene oxide added to an ester (monoester, diester or trimester) of sorbitan and a fatty acid. The fatty acid is a linear, branched or cyclic, saturated or unsaturated fatty acid, preferably a $C_{4-24}$ fatty acid, more preferably a $C_{8-20}$ fatty acid, and the number and the position of the unsaturated bonds are not particularly limited. The fatty acid may, for example, be specifically butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, isostearic acid, oleic acid, vaccenic acid, linoleic acid, (9,12,15)-linolenic acid, tuberculostearic acid, arachidic acid, mead acid, lignoceric or nervonic acid, but is not limited thereto. The average number of moles of ethylene oxide added in the polyoxyethylene sorbitan fatty acid ester is not particularly limited and is preferably from 1 to 100 moles, more preferably from 1 to 50 moles, further preferably from 1 to 30 moles.

The polyoxyethylene sorbitan fatty acid ester may, for example, be specifically polyoxyethylene sorbitan monolaurate, polyoxyethylene sorbitan dilaurate, polyoxyethylene sorbitan trilaurate, polyoxyethylene sorbitan monopalmitate, polyoxyethylene sorbitan dipalmitate, polyoxyethylene sorbitan tripalmitate, polyoxyethylene sorbitan monomyristate, polyoxyethylene sorbitan dimyristate, polyoxyethylene sorbitan trimyristate, polyoxyethylene sorbitan monostearate, polyoxyethylene sorbitan distearate, polyoxyethylene sorbitan tristearate, polyoxyethylene sorbitan monoisostearate, polyoxyethylene sorbitan diisostearate, polyoxyethylene sorbitan triisostearate, polyoxyethylene sorbitan monooleate, polyoxyethylene sorbitan dioleate or polyoxyethylene sorbitan trioleate.

As the polyoxyethylene sorbitan fatty acid ester, commercial products may be used, and specific examples of the commercial products include SORBON T-20, SORBON T-40, SORBON T-60, SORBON T-80, etc. (manufactured by Toho Chemical Industry Co., Ltd.); SOLGEN TW-20, SOLGEN TW-60, SOLGEN TW-80, SOLGEN TW-80V, etc. (manufactured by DKS Co., Ltd.); RHEODOL TW-L120, RHEODOL TW-L106, RHEODOL TW-P120, RHEODOL TW-S120V, RHEODOL TW-S106V, RHEODOL TW-S320V, RHEODOL TW-O120V, RHEODOL TW-O106V, RHEODOL TW-O320V, RHEODOL TW-IS399C, RHEODOL SUPER TW-L120, etc. (manufactured by Kao Corporation); Alkamuls T/20, Alkamuls T/80, Alkamuls T/85V, etc. (manufactured by SOLVAY); Tween 20, Tween 21, Tween 40, Tween 60, Tween 61, Tween 65, Tween 80, Tween 81, Tween 85, etc. (manufactured by Croda); and Agnique SPO 40, etc. (manufactured by BASF), but the commercial products are not limited thereto.

In the present invention, the polyoxyethylene alkyl ether is a compound in which a polyoxyethylene chain and an alkyl group are bonded by an ether bond, and the alkyl group is a linear, branched or cyclic, saturated or unsaturated alkyl group, preferably a $C_{4-24}$ alkyl group (such as octyl, nonyl, decyl, undecyl, dodecyl, tridecyl, tetradecyl or pentadecyl), more preferably a $C_{8-20}$ alkyl group. The number and the position of the unsaturated bonds are not particularly limited. The average number of moles of ethylene oxide added in the polyoxyethylene alkyl ether is not particularly limited and is preferably from 1 to 100 moles, more preferably from 1 to 50 moles, further preferably from 1 to 30 moles.

As the polyoxyethylene alkyl ether, commercial products may be used, and specific examples of the commercial products include PEGNOL TH-8, PEGNOL L-12S, PEGNOL ST-3, PEGNOL ST-5, PEGNOL ST-7, PEGNOL ST-9, PEGNOL ST-12, etc. (manufactured by Toho Chemical Industry Co., Ltd.); Rhodasurf CST 15, Rhodasurf DA 630E,

Rhodasurf ID 79, Rhodasurf TR6, Rhodasurf 840, Rhodasurf 860 P, Rhodasurf 870, Rhodasurf ID5, Rhodasurf LA/30, Rhodasurf LA/40, etc. (manufactured by SOLVAY); Synergen W 06, Genapol C 050, Genapol C 070, Genapol C 100, Genapol C 120, Genapol C200, Genapol ID 060, Genapol ID 100, Genapol O 100, Genapol O 109, Genapol T 150, Genapol X 050, Genapol X 060, Genapol X 080, Genapol X 15, etc. (manufactured by CLARIANT); Briji C2, Briji C10, Briji C20, Briji CS17, Briji L4, Briji L23, Briji O2, Briji O3, Briji O10, Briji O20, Briji S2, Briji S10, Briji S20, Briji S100, Briji S721, Synperonic L11, Atlox 4991, Atlox MBA 11/8, Atlox MBA 13/15, Cresmer A2, Cresmer A5, Cresmer A9, Cresmer A11, Cresmer A20, Synperonic 10/6, Synperonic 13/3, Synperonic 13/5, Synperonic 13/6, Synperonic 10/6.5, Synperonic 10/8, Synperonic 13/9, Synperonic 13/10, Synperonic 13/12, Synperonic 91/2.5, Synperonic 91/5, Synperonic 91/6, Synperonic 91/8, Synperonic 91/10, Synperonic A2, Synperonic A3, Synperonic A4, Synperonic A7, Synperonic A11, Synperonic A20, Synperonic AB6, Synperonic AB8-90, etc. (manufactured by Croda); MAKON DA-4, MAKON DA-6, MAKON DA-9, MAKON TD-3, MAKON TD-6, MAKON TD-12, MAKON TD-18, MAKON TD-50, BIO-SOFT N1-5, BIO-SOFT N1-7, BIO-SOFT N1-9, BIO-SOFT N91-6, BIO-SOFT N91-8, BIO-SOFT N23-6.5, BIO-SOFT N25-9, MAKON NF-12, MAKON NF-12E, MAKON NF-5, etc. (manufactured by Stepan Company); TERMUL 203, TERMUL 3630, TERMUL 3651, TERMUL 5429, TERMUL 5459, TERMUL 5500, etc. (manufactured by HUNTSMAN); Agnique FOH 90C-3, Agnique FOH 90C-5, Agnique BP 24-54, Lutensol TO 2, Lutensol TO 3, Lutensol TO 5, Lutensol TO 6, Lutensol TO 7, Lutensol TO 8, Lutensol TO 10, Lutensol TO 12, Lutensol TO 15, Lutensol TO 20, Lutensol ON 30, Lutensol ON 50, Lutensol ON 60, Lutensol ON 80, Lutensol ON 110, Lutensol XP 30, Lutensol XP 40, Lutensol XP 50, Lutensol XP 60, Lutensol XP 70, Lutensol XP 80, Lutensol XP 90, Lutensol XP 100, Lutensol XP 140, Lutensol XL 40, Lutensol XL 50, Lutensol XL 60, Lutensol XL 70, Lutensol XL 80, Lutensol XL 90, Lutensol XL 100, Lutensol XL 140, Lutensol XA 40, Lutensol XA 50, Lutensol XA 60, Lutensol A 4 N, Lutensol A 7 N, Lutensol A 8, Lutensol AO 3, Lutensol AO 5, Lutensol AO 7, Lutensol AO 8, Lutensol AO 11, Lutensol AO 30, Lutensol AT 11, Lutensol AT 18, Lutensol AT 25 Powder, Lutensol AT 25 Flakes, Lutensol AT 50 Powder, Lutensol AT 50 Flakes, Lutensol AT 80 Powder, Lutensol AT 80 Flakes, etc. (manufactured by BASF); NOIGEN XL-40, NOIGEN XL-41, NOIGEN XL-50, NOIGEN XL-60, NOIGEN XL-6190, NOIGEN XL-70, NOIGEN XL-80, NOIGEN XL-100, NOIGEN XL-140, NOIGEN XL-160, NOIGEN XL-160D, NOIGEN XL-400, NOIGEN XL-400D, NOIGEN XL-1000, NOIGEN TDS-30, NOIGEN TDS-50, NOIGEN TDS-70, NOIGEN TDS-80, NOIGEN TDS-100, NOIGEN TDS-120, NOIGEN TDS-200D, NOIGEN TDS-500F, NOIGEN LF-60X, NOIGEN LF-80X, NOIGEN LF-100X, NOIGEN LF-202N, NOIGEN TDX-50, NOIGEN TDX-80, NOIGEN TDX-80D, NOIGEN TDX-100D, NOIGEN TDX-120D, NOIGEN SD-30, NOIGEN SD-60, NOIGEN SD-70, NOIGEN SD-80, NOIGEN SD-110, NOIGEN LP-70, NOIGEN LP-100, NOIGEN LP-180, DKS NL-Dash 400, DKS NL-Dash 403, DKS NL-Dash 404, DKS NL-Dash 408, DKS NL-Dash 410, NOIGEN CL-230, etc. (manufactured by DKS Co., Ltd.), but the commercial products are not limited thereto.

The average number of moles of ethylene oxide added in the polyoxyethylene hydrogenated castor oil or the polyoxyethylene castor oil is not particularly limited and is preferably from 1 to 200 moles, more preferably from 2 to 150 moles, further preferably from 10 to 100 moles.

As the polyoxyethylene hydrogenated castor oil or the polyoxyethylene castor oil, commercial products may be used. Specific examples of the commercial products of the polyoxyethylene hydrogenated castor oil include EMANON CH-25, EMANON CH-40, EMANON CH-60, EMANON CH-80, etc. (manufactured by Kao Corporation); SORPOL HC-10, SORPOL HC-20, SORPOL HC-40, SORPOL HC-50, SORPOL HC-80, SORPOL HC-100, SORPOL HC-150, etc. (manufactured by Toho Chemical Industry Co., Ltd.); Cirrasol G-1292, etc. (manufactured by Croda); NOIGEN HC-400, NOIGEN HC-600, etc. (manufactured by DKS Co., Ltd.); NIKKOL HCO-5, NIKKOL HCO-10, NIKKOL HCO-20, NIKKOL HCO-30, NIKKOL HCO-40, NIKKOL HCO-50, NIKKOL HCO-60, NIKKOL HCO-80, NIKKOL HCO-100, etc. (manufactured by Nikko Chemicals Co., Ltd.); and EMALEX HC-5, EMALEX HC-7, EMALEX HC-10, EMALEX HC-20, EMALEX HC-30, EMALEX HC-40, EMALEX HC-50, EMALEX HC-60, EMALEX HC-80, EMALEX HC-100, etc. (manufactured by Nihon Emulsion Co., Ltd.), but the commercial products are not limited thereto.

Further, specific examples of the commercial products of the polyoxyethylene castor oil include SORPOL CA-15, SORPOL CA-20, SORPOL CA-30, SORPOL CA-42, SORPOL CA-50, etc. (manufactured by Toho Chemical Industry Co., Ltd.); Alkamuls 696, Alkamuls R/81, Alkamuls RC, Alkamuls B, Alkamuls BR, Alkamuls SC 242, Alkamuls OR/36, Alkamuls 14R, etc. (manufactured by SOLVAY); Emulsogenr EL 200, Emulsogenr EL 300, Emulsogenr EL 360, Emulsogenr EL 400, Emulsogenr EL 540, etc. (manufactured by CLARIANT); Atlox 3418, Atlox 3484, Cirrasol G-1282, Cirrasol G-1284, Etocas 5, Etocas 10, Etocas 29, Etocas 32, Etocas 35, Etocas 40, etc. (manufactured by Croda); Toximul 8240, Toximul 8241, Toximul 8242, etc. (manufactured by Stepan Company); TERMUL 1283, TERMUL 1284, TERMUL 1285, TERMUL 2507, TERMUL 3512, TERMUL3532, TERMUL 3540, etc. (manufactured by HUNTSMAN); Agnique CSO-20, Agnique CSO-35, Agnique CSO-40, etc. (manufactured by BASF), but the commercial products are not limited thereto.

In the present invention, the component (c) preferably comprises one or more components selected from the group consisting of the polyoxyethylene alkyl ether phosphate or its salt (particularly sodium salt), the polyoxyethylene hydrogenated castor oil and the polyoxyethylene castor oil.

The concentrations of the component (a) and the component (b) contained in the spray solution prepared in the step (1) are not particularly limited so long as the effects of the present invention are exhibited, and for example, the

concentration of the component (a) is usually from 0.0001 to 0.3 weight/volume percent, preferably from 0.0005 to 0.2 weight/volume percent, more preferably from 0.001 to 0.1 weight/volume percent, and the concentration of the component (b) is usually from 0.00001 to 0.3 weight/volume percent, preferably from 0.000025 to 0.2 weight/volume percent, more preferably from 0.00005 to 0.1 weight/volume percent.

The concentrations of the component (a) and the component (b) contained in the spray solution may be determined in accordance with the application amounts of the component (a) and the component (b). The application amount of the component (a) is usually from 1 to 120 g, preferably from 5 to 120 g, more preferably from 10 to 80 g, further preferably from 20 to 60 g per hectare, and the application amount of the component (b) is usually from 0.01 to 240 g, preferably from 0.1 to 100 g, more preferably from 0.1 to 120 g, further preferably from 1 to 60 g per hectare.

Accordingly, the spray solution may be prepared by dilution with the component (d) so that the components (a) and (b) are contained at the above concentrations in addition to the above component (c) in accordance with the above predetermined concentration.

In the step (1), the specific means to prepare the spray solution of the present invention is not particularly limited, and a means known in this technical field may be employed. For example, the spray solution of the present invention may be prepared:

- by mixing an agricultural formulation containing the component (a), an agricultural formulation containing the component (b) and a formulation containing the component (c) with the component (d) in a tank,
- by mixing an agricultural formulation containing the component (a), the component (b) and the component (c) with the component (d) in a tank,
- by mixing an agricultural formulation containing the component (a) and the component (b) and a formulation containing the component (c) with the component (d) in a tank, or
- by mixing an agricultural formulation containing the component (a) and the component (c) and an agricultural formulation containing the component (b) with the component (d) in a tank, so that the concentration of the component (c) in the spray solution is within the predetermined range. Such agricultural formulations may contain, in addition to the component (a), the component (b) and/or the component (c), various additives (details will be described hereinafter) commonly used in this technical field.

The spray solution of the present invention may contain, in addition to the components (a) to (d), in order to bring further benefits to the health and/or growth of useful plants, (e) one or more components selected from fertilizers and plant growth regulators (referred to as component (e) in this specification), and/or (f) one or more components selected from other agriculturally active ingredients (for example, herbicides, insecticides and fungicides) (referred to as component (f) in this specification). The concentrations of the component (e) and the component (f) are not particularly limited so long as the effects of the present invention are exhibited, and can easily be determined by those skilled in the art.

Such component (e) and component (f) are not particularly limited, and may, for example, be fertilizers such as nitrogen fertilizers, phosphate fertilizers and potassium fertilizers, and plant growth regulators, herbicides, insecticides and fungicides described in "The Pesticide Manual", eighteenth Edition, The British Crop Protection Council, 2018. In the present invention, with a view to further bringing benefits to the health and/or growth of useful plants, it is particularly preferred that (e) one or more components selected from fertilizers and plant growth regulators are contained in the spray solution. The component (e) and the component (f) are added usually when the spray solution is prepared in a tank.

In the step (2) in the method of the present invention, the spray solution prepared in the step (1) is applied to useful plants or to a place where they grow. The place where the useful plants grow means a place where the above useful plants are growing or are to grow in future, and may, for example, be agricultural fields such as crop plant fields, orchards, mulberry fields and lawn fields, and non-agricultural fields such as parking areas, cemeteries, roads, residential land, embankment, play grounds, gardens and parks. Among them, the spray solution is applied preferably to agricultural fields, particularly crop plant fields, where corn is growing or is to grow in future.

The spray solution prepared in the step (1) may be applied to the useful plants or to the place where they grow in a wide range of application amount. The method of the present invention, by which the spray solution can be applied in a wide range of application amount (spray volume), is advantageous in being applicable to application in various regions in the world. Further, the method of the present invention, which is applicable to low-volume application (application amount: from about 50 to about 100 L/ha), is useful also from the viewpoint of labor saving for workers. With respect to the application amount, the spray solution may be applied so that the component (a) is applied in an amount of usually from 5 to 120 g/ha, preferably from 10 to 80 g/ha, more preferably from 20 to 60 g/ha, and the component (b) is applied in an amount of usually from 0.01 to 240 g/ha, preferably from 0.1 to 100 g/ha, more preferably from 1 to 60 g/ha.

The timing when the spray solution prepared in the step (1) is applied to the useful plants or to the place where they grow is not particularly limited and for example, a period from before emergence to the growth period of weeds to be controlled by the component (a) or in a case where the useful plants are corn, a period after sowing to the growth period of corn. In order to exhibit the effects of the present invention, it is preferred to apply the spray solution during

the corn growth period, particularly by overall foliar treatment or furrow foliar treatment.

Weeds to be controlled by the method of the present invention are not particularly limited and include

Gramineae such as barnyardgrass (Echinochloa crus-galli L., Echinochloa oryzicola vasing.), crabgrass (Digitaria sanguinalis L., Digitaria ciliaris., Digitaria ischaemum Muhl., Digitaria adscendens Henr., Digitaria microbachne Henr., Digitaria horizontalis Willd.), green foxtail (Setaria viridis L.), giant foxtail (Setaria faberi Herrm.), yellow foxtail (Setaria lutescens Hubb.), goosegrass (Eleusine indica L.), wild oat (Avena fatua L.), johnsongrass (Sorghum halepense L.), quackgrass (Agropyron repens L.), alexandergrass (Brachiaria plantaginea), guineagrass (Panicum maximum Jacq.), paragrass (Panicum purpurascens), sprangletop (Leptochloa chinensis), red sprangletop (Leptochloapanicea), annual bluegrass (Poa annua L.), black grass (Alopecurus myosuroides Huds.), cholorado bluestem (Agropyron tsukushiense (Honda) Ohwi), broadleaf signalgrass (Brachiaria platyphylla Nash), southern sandbur (Cenchrus echinatus L.), italian ryegrass (Lolium multiflorum Lam.), bermudagrass (Cynodon dactylon Pers.), violet crabgrass (Digitaria violascens Link), knotgrass (Paspalum distichum L.), little quakinggrass (Briza minor L.), sweet vernalgrass (Anthoxanthum odoratum L.), fall panicum (Panicum dichotomiflorum Michx), Millet (Panicum Miliaceum L.), shattercane (Sorghum bicolor (L.) Moench), and sloughgrass (Beckmannia syzigachne);

Cyperaceae such as rice flatsedge (Cyperus iria L.), purple nutsedge (Cyperus rotundus L.), yellow nutsedge (Cyperus esculentus L.), flatsedge (Cyperus serotinus), small-flower umbrellaplant (Cyperus difformis), slender spikerush (Eleocharis acicularis), water chestnut (Eleocharis kuroguwai), green kyllinga (kyllinga brevifolia Rottb. var. leiolepis), Schoenoplectus nipponicus, cosmopolitan bulrush (Bolboschoenus koshevnikovii), amur cyperus (Cyperus microiria Steud.), and rock bulrush (Schoenoplectus juncoides Palla.);

Alismataceae such as Japanese ribbon waparo (Sagittariapygmaea), arrow-head (Sagittaria trifolia), and narrowleaf waterplantain (Alisma canaliculatum);

Pontederiaceae such as monochoria (Monochoria vaginalis), and monochoria species (Monochoria korsakowii);

Lythraceae such as toothcup (Rotala india), and red stem (Ammannia multiflora);

Elatinaceae such as long stem waterwort (Elatine triandra SCHK.);

Malvaceae such as velvetleaf (Abutilon theophrasti MEDIC.), and prickly sida (Sida spinosa L.);

Asteraceae such as common cocklebur (Xanthium strumarium L.), common ragweed (Ambrosia elatior L.), thistle (Breea setosa (BIEB.) KITAM.), hairy galinsoga (Galinsoga ciliata Blake), wild chamomile (Matricaria chamomilla L.), hairy fleabane (Conyza bonariensis(L.)Cron.), tall fleabane (Conyza sumatrensis), tall goldenrod (Solidago altissima L.), philadelphia fleabane (Erigeron philadelphicus L.), annual fleabane (Erigeron annuus(L.)Pers.), common groundsel (Senecio vulgaris L.), giant ragweed (Ambrosia trifida L.), horseweed (Conyza canadensis(L.)Cron.), dandelion (Taraxacum officinale), devils beggarticks (Bidens frondosa L.), and Bidens biternate(Lour.) Merr.et Sherff;

Solanaceae such as black nightshade (Solanum nigrum L.), jimsonweed (Datura stramonium), cutleaf groundcherry (Physalis angulate L. var. angulata), and horsenettle (Solanum carolinense L.);

Amaranthaceae such as slender amaranth (Amaranthus viridis L.), redroot pigweed (Amaranthus retroflexus L.), livid amaranth (Amaranthus blitum L.), Achyranthes bidentata Blume var. japonica Miq., Amaranthus palmeri S. Watson, smooth pigweed (Amaranthus hybridus L.), powell amaranth (Amaranthus powellii S. Watson), spiny amaranth (Amaranthus spinosus L.), clammy goosefoot (Dyspharina pumilio(R.Br.)), common lambsquarters (Chenopodium album L.), and Chenopodium album L. var. centrorubrum Makino;

Polygonaceae such as pale smartweed (Polygonum lapathifolium L.), ladysthumb (Polygonum persicaria L.), wild buckwheat (Polygonum convolvulus L.), knotweed (Polygonum aviculare L.), pale smartweed (Persicaria lapathifolia(L.)Delarbre var. lapathifolia), japanese knotweed (Fallopia japonica(Houtt.)Ronse Decr. var. japonica), Persicaria longiseta (Bruiln)Kitag.), red sores (Rumex acetosella L. subsp. pyrenaicus), Persicaria thunbergii, Persicaria nepalensis(Meisn.)H.Gross, and Rumex japonicus Houtt;

Brassicaceae such as flexuous bittercress (Cardamine flexuosa WITH.), shepherd's-purse (Capsella bursa-pastoris Medik.), indian mustard (Brassicajuncea Czern.), Rorippa indica(L.), and marsh yellowcress (Rorippa palustris(L.));

Convolvulaceae such as tall morningglory (Ipomoea purpurea L.), field bindweed (Calystegia arvensis L.), and ivyleaf morningglory (Ipomoea hederacea Jacq.);

Portulacaceae such as common purslane (Portulaca oleracea L.);

Fabaceae such as sicklepod (Cassia obtusifolia L.), red clover (Trifolium pretense L.), narrowleaf vetch (Vicia sativa L. subso. nigra(L.), Ehrh.var.segetalis (Thuill.)Ser.), white clover (Trifolium repens L.), tiny vetch (Vicia hirsute(L.)), Medicago sativa L., black medic (Medicago lupulina L.), common lespedeza (Kummerowia striata(Thunb.)Schindl), smallhop clover (Trifolium dubium Sibth), and birdsfoot trefoil (Lotus corniculatus L. var. japonicus Regel);

Caryophyllaceae such as common chickweed (Stellaria media L.), water starwort (Stellaria aquatica (L.)), sticky chickweed (Cerastium glomeratum Thuill.), Sagina japonica(Se.)Ohwi, and Stellaria uliginosa Murray var. undulata;

Lamiaceae such as henbit (Lamium amplexicauleL.) and purple deadnettle (Lamium purpureum L.);

Rubiaceae such as catchweed (Galium spurium L.);

Euphorbiaceae such as threeseeded copperleaf (Acalypha australis L.), and spotted spurge (Euphorbia maculate L.);

Commelinaceae such as common asiatic dayflower (Commelina communis L.);
Linderniaceae such as false pimpernel (Lindernia procumbens), false pimpernel (Lindernia dubia (L.) Pennell subsp. major Pennell), false pimpernel (Lindernia dubia (L.) Pennell subsp. dubia), and Lindernia micrantha D. Don;
Plantaginaceae such as dopatrium (Dopatrium junceum), Gratiola japonica Miq, Plantago asiatica L., persian speedwell (Veronica persica Poir.), and corn speedwell (Veronica arvensis L.); and the like. Particularly, the method of the present invention can bring benefits to the health and/or growth of corn by controlling weeds which may have influences over the growth of corn, for example, weeds including barnyardgrass (Echinochloa crus-galli L., Echinochloa oryzicola vasing.), crabgrass (Digitaria sanguinalis L., Digitaria ciliaris., Digitaria ischaemum Muhl., Digitaria adscendens Henr., Digitaria microbachne Henr., Digitaria horizontalis Willd.), green foxtail (Setaria viridis L.), giant foxtail (Setaria faberi Herrm.), yellow foxtail (Setaria lutescens Hubb.), goosegrass (Eleusine indica L.), johnsongrass (Sorghum halepense L.), quackgrass (Agropyron repens L.), alexandergrass (Brachiaria plantaginea), guineagrass (Panicum maximum Jacq.), sprangletop (Leptochloa chinensis), red sprangletop (Leptochloapanicea), annual bluegrass (Poa annua L.), italian ryegrass (Lolium multiflorum Lam.), bermudagrass (Cynodon dactylon Pers.), sweet vernalgrass (Anthoxanthum odoratum L.), fall panicum (Panicum dichotomiflorum Michx), Millet (Panicum Miliaceum L.)), shattercane (Sorghum bicolor (L.) Moench), and sloughgrass (Beckmannia syzigachne).

Further, the spray solution prepared in the step (1) may be applied to useful plants in various growth environment. Particularly in a case where the useful plant growth environment is at high temperature (for example, at air temperature of from 25 to 40°C), undesired effects to the useful plants resulting from the component (a) may sometimes be enhanced by the presence of the component (c) or other components contained in the agricultural formulation, and the method of the present invention is useful in such cases.

The present invention further relates to an agricultural formulation comprising the components (a) to (c) to be used for the above method of the present invention.

The components (a) to (c) contained in the agricultural formulation of the present invention are as described above. The weight ratio of the component (a) to the component (b) in the agricultural formulation of the present invention is usually from 1:50 to 1:0.001, preferably from 1:10 to 1:0.005, more preferably from 1:5 to 1:0.01. The weight ratio of the component (a) to the component (c) in the agricultural formulation of the present invention is usually from 1:0.05 to 1:20, preferably from 1:0.1 to 1:10, more preferably from 1:1 to 1:5.

The agricultural formulation of the present invention may be formulated into any formulation type commonly employed in this technical field so long as the objects of the present invention are met, and may be formulated into various formulations such as dusts, granules, water dispersible granules, wettable powders, tablets, pills, capsules (including a formulation packaged by a water soluble film), water-based suspensions, oil-based suspensions, microemulsions, suspoemulsions, water soluble powders, emulsifiable concentrates, soluble concentrates or paste, preferably oil-based suspensions. At the time of formulation, a method known to those skilled in the art may be employed.

The agricultural formulation of the present invention may contain, in addition to the components (a) to (c), various additives commonly used in this technical field. Such additives include, for example, a solid carrier such as diatomaceous earth, slaked lime, calcium carbonate, talc, white carbon, kaoline, bentonite, kaolinite, sericite, clay, sodium carbonate, sodium bicarbonate, mirabilite, zeolite or starch; a solvent such as water, toluene, xylene, solvent naphtha, dioxane, acetone, isophorone, methyl isobutyl ketone, chlorobenzene, cyclohexane, dimethyl sulfoxide, dimethylformamide, dimethylacetamide, N-methyl-2-pyrrolidone or an alcohol; an anionic surfactant such as a salt of fatty acid, a benzoate, an alkylsulfosuccinate, a dialkylsulfosuccinate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylbenzene sulfonate, dioctyl sulfonate, an alkylaryl sulfonate, an aryl sulfonate, a lignin sulfonate, an alkyldiphenyl ether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a salt of polyoxyethylene aryl ether phosphoric acid ester, a naphthalene sulfonate condensed with formaldehyde or an alkylnaphthalene sulfonate condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, a polyoxyalkylene block polymer, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene glycerin fatty acid ester, a polyoxypropylene fatty acid ester or a polyoxyethylene polyoxypropylene block copolymer; and a vegetable oil such as olive oil, kapok oil, castor oil, palm oil, camellia oil, coconut oil, sesame oil, corn oil, rice bran oil, peanut oil, cottonseed oil, soybean oil, rapeseed oil, linseed oil or tung oil, an ester such a vegetable oil, liquid paraffin or a mineral oil. These additives may suitably be selected for use alone or in combination as a mixture of two or more of them, so long as the object of the present invention is met. Further, various additives commonly used, such as a filler, a thickener, an anti-settling agent, an anti-freezing agent, a dispersion stabilizer, a safener, an anti-mold agent, a blowing agent, a disintegrator and a binder, may be used. The mixing weight ratio of the total of the components (a), (b) and (c) to the above various additives is from about 0.1:99.9 to about 95:5, preferably

from about 0.2:99.8 to about 85:15.

The agricultural formulation of the present invention is particularly preferably in the form of an oil-based suspension. The additives in the oil-based suspension may, for example, be an anionic surfactant such as a salt of fatty acid, an alkyl sulfate, an alkylaryl sulfate, an alkyl sulfonate, an alkylbenzene sulfonate, dioctyl sulfonate, an alkylaryl sulfonate, an aryl sulfonate, a salt of a polyoxyethylene alkyl ether sulfuric acid ester, a polyoxyethylene alkyl aryl ether sulfate, or a salt of a polyoxyethylene alkyl aryl ether sulfuric acid ester;

a nonionic surfactant such as a sorbitan fatty acid ester, a glycerin fatty acid ester, a fatty acid alcohol polyglycol ether, acetylene glycol, acetylene alcohol, a polyoxyalkylene block polymer, a polyoxyethylene alkyl aryl ether, a polyoxyethylene styryl aryl ether, polyethylene glycol, or a polyoxyethylene polyoxypropylene block copolymer;
an anti-settling agent such as organic bentonite or silica; or
a vegetable oil such as corn oil, soybean oil or rapeseed oil, an ester of such a vegetable oil, liquid paraffin or a mineral oil.

Now, examples of preferred embodiments of the present invention will be described, however, the present invention is by no means restricted thereto.

[1] A method which brings benefits to the health and/or growth of useful plants, which comprises:

(1) a step of preparing a spray solution containing at least

(a) nicosulfuron,
(b) isoxadifen-ethyl,
(c) one or more components selected from the group consisting of a polyoxyethylene alkyl ether phosphate or its salt, a polyoxyethylene alkylamine, a polyoxyethylene sorbitan fatty acid ester, a polyoxyethylene alkyl ether, a polyoxyethylene hydrogenated castor oil and a polyoxyethylene castor oil, and
(d) water,

so that the concentration of the component (c) in the spray solution is from 0.001 to 0.25 weight/volume percent; and
(2) a step of applying the spray solution prepared in the step (1) to useful plants or to a place where they grow.

[2] The method according to [1], wherein the component (c) contains one or more components selected from the group consisting of a polyoxyethylene alkyl ether phosphate or its salt, a polyoxyethylene hydrogenated castor oil and a polyoxyethylene castor oil.
[3] The method according to [1] or [2], wherein the concentration of the component (c) in the spray solution is from 0.005 to 0.2 weight/volume percent.
[4] The method according to [1] or [2], wherein the concentration of the component (c) in the spray solution is from 0.01 to 0.15 weight/volume percent.
[5] The method according to any one of [1] to [4], wherein the spray solution prepared in the step (1) further contains (e) one or more components selected from fertilizers and plant growth regulators, and/or (f) one or more components selected from other agriculturally active ingredients.
[6] The method according to any one of [1] to [4], wherein the spray solution prepared in the step (1) further contains one or more components selected from (e) fertilizers and plant growth regulators.
[7] The method according to any one of [1] to [4], wherein the spray solution prepared in the step (1) further contains one or more components selected from (f) other agriculturally active ingredients.
[8] The method according to any one of [1] to [7], wherein the useful plants are corn, grass, turf, lawn, wheat, rice, sugar cane, banana, citrus, cacao, coconut, coffee, oil palm, olive, pome, stone fruit, tropical fruit, gum tree, tree nuts, tropical nuts, vine or grape.
[9] The method according to any one of [1] to [7], wherein the useful plants are corn.
[10] The method according to any one of [1] to [9], wherein the spray solution is applied in an application amount of from 50 to 2,000 L/ha.
[11] The method according to any one of [1] to [9], wherein the spray solution is applied in an application amount of from 100 to 1,000 L/ha.
[12] The method according to any one of [1] to [11], wherein the spray solution is applied so that the amount of the component (a) is from 1 to 120 g/ha and the amount of the component (b) is from 0.1 to 120 g/ha.
[13] The method according to any one of [1] to [12], which brings benefits to the health and/or growth of useful plants, by either one or both of (1) controlling weeds which have harmful effects on the health and/or growth of the useful

plants, and (2) reducing harmful effects on the health and/or growth of the useful plants caused by herbicides used in (1).

[14] An agricultural formulation to be used for the method as defined in any one of [1] to [13], comprising

(a) nicosulfuron,
(b) isoxadifen-ethyl, and
(c) one or more components selected from the group consisting of a polyoxyethylene alkyl ether phosphate or its salt, a polyoxyethylene alkylamine, a polyoxyethylene sorbitan fatty acid ester, a polyoxyethylene alkyl ether, a polyoxyethylene hydrogenated castor oil and a polyoxyethylene castor oil.

[15] The agricultural formulation according to [14], wherein the weight ratio of the component (a) to the component (b) is from 1:50 to 1:0.001, and the weight ratio of the component (a) to the component (c) is from 1:0.05 to 1:20.

[16] The agricultural formulation according to [14] or [15], which is in the form of an oil-based suspension.

EXAMPLES

Test Example 1-1

Upland field soil was put into a 1/1,000,000 hectare pot, and seeds of field corn (variety: SNOWDENT SH2933, variety highly susceptible to component (a)) were sown. When the field corn reached 3.0 to 3.1 leaf stage, a WG containing the component (a) (trade name: Accent, manufactured by DuPont), and a WG containing the component (a) and the component (b) (trade name: Accent Q, manufactured by DuPont) were diluted with water (corresponding to 1,000 L/ha) containing a predetermined amount of the component (c) or as a comparison a modified seed oil (MSO) (trade name: Destiny HC, manufactured by Winfield Solutions, LLC.) or a crop oil concentrate (COC) (trade name: Agri-dex, manufactured by Helena) of which use in combination with the commercial products used in this Test Example is recommended, to prepare spray solutions. The spray solutions were applied to foliage with an automatic boom sprayer (dose of component (a): 120 g/ha, dose of component (b): 0 or 30 g/ha). On the 7th day after the foliar application, the above-ground height of the field corn was measured, and the height ratio was calculated in accordance with the following formula. The above-ground height in the untreated plot was 57.8 cm.

$$\text{Height ratio (\%)} = (\text{above-ground height in the treated plot}) / (\text{above-ground height in the untreated plot}) \times 100$$

The results are shown in Table 1.

Table 1

| Dose of component (b) | Component (c) Name | Concentration (w/v%) | Above-ground height (cm) | Height ratio (%) |
|---|---|---|---|---|
| 0 g/ha | Polyoxyethylene alkylamine | 0.02 | 27.3 | 47 |
| | | 0.01 | 26.5 | 46 |
| | | 0.005 | 41.3 | 71 |
| | | 0.001 | 38.8 | 67 |
| | Polyoxyethylene hydrogenated castor oil | 0.02 | 25.5 | 44 |
| | | 0.01 | 33.4 | 58 |
| | | 0.005 | 41.4 | 72 |
| | | 0.001 | 44.1 | 76 |
| | Sodium polyoxyethylene alkyl ether phosphate | 0.02 | 33.0 | 57 |
| | | 0.01 | 41.4 | 72 |
| | | 0.005 | 40.0 | 69 |
| | | 0.001 | 45.8 | 79 |
| | (Comparative) MSO | 0.5 | 26.3 | 45 |
| | (Comparative) COC | 0.5 | 25.9 | 45 |
| 30 g/ha | Polyoxyethylene alkylamine | 0.02 | 47.8 | 83 |
| | | 0.01 | 51.3 | 89 |
| | | 0.005 | 53.3 | 92 |
| | | 0.001 | 52.7 | 91 |
| | Polyoxyethylene hydrogenated castor oil | 0.02 | 51.8 | 90 |
| | | 0.01 | 53.9 | 93 |
| | | 0.005 | 48.8 | 84 |
| | | 0.001 | 53.5 | 93 |
| | Sodium polyoxyethylene alkyl ether phosphate | 0.02 | 50.8 | 88 |
| | | 0.01 | 54.5 | 94 |
| | | 0.005 | 51.0 | 88 |
| | | 0.001 | 52.2 | 90 |
| | (Comparative) MSO | 0.5 | 51.4 | 89 |
| | (Comparative) COC | 0.5 | 48.0 | 83 |

As evident from Table 1, in a case where a spray solution containing no component (b) and containing the component (a) and the component (c) of the present invention or the adjuvant recommended was applied, the height ratio was within a range of from 44 to 79%, thus indicating that the above-ground height of the corn was suppressed as compared with the untreated plot. On the other hand, by use of the component (b), the height ratio remarkably improved in all the cases, and the tendency toward recovery of the above-ground height suppressed by the component (a) was observed. Further, the minimum concentration of the component (c) required to obtain the corn growth state equal to that by the 0.5 weight/volume% adjuvant (MSO, COC) recommended by the commercial products was 0.001 weight/volume%. Thus, it was found that the safety of the corn can be secured even if the amount of the component (c) of the present invention used was remarkably reduced from the amount of the conventional adjuvant used.

Test Example 1-2

Upland field soil was put into a 1/1,000,000 hectare pot, and seeds of crabgrass (Digitaria ciliaris) were sown. When the crabgrass reached 1.1 to 1.5 leaf stage, a WG containing the component (a) (trade name: Accent, manufactured by DuPont) and a WG containing the component (a) and the component (b) (trade name: Accent Q, manufactured by DuPont) were diluted with water (corresponding to 1,000 L/ha) containing a predetermined amount of the component (c) or as a comparison a modified seed oil (MSO) (trade name: Destiny HC, manufactured by Winfield Solutions, LLC.) or a crop oil concentrate (COC) (trade name: Agri-dex, manufactured by Helena) of which use in combination with the commercial products used in this Test Example is recommended, to prepare spray solutions. The spray solutions were applied to foliage with an automatic boom sprayer (dose of component (a): 30 g/ha, dose of component (b): 0 or 7.5 g/ha). On the 10th day after the foliar application, the plant growth state was visually observed, and the herbicidal efficacy on the crabgrass was obtained in accordance with the evaluation criteria.

Herbicidal efficacy (%) = 0 (equivalent to the untreated plot) to 100 (completely killed)

The results are shown in Table 2.

Table 2

| Dose of component (b) | Component (c) | | Herbicidal efficacy on crabgrass (%) |
|---|---|---|---|
| | Name | Concentration (w/v%) | |
| 0 g/ha | Polyoxyethylene alkylamine | 0.02 | 90 |
| | | 0.01 | 90 |
| | | 0.005 | 88 |
| | | 0.001 | 83 |
| | Polyoxyethylene hydrogenated castor oil | 0.02 | 92 |
| | | 0.01 | 92 |
| | | 0.005 | 91 |
| | | 0.001 | 83 |
| | Sodium polyoxyethylene alkyl ether phosphate | 0.02 | 90 |
| | | 0.01 | 90 |
| | | 0.005 | 90 |
| | | 0.001 | 82 |
| | (Comparative) MSO | 0.5 | 94 |
| | (Comparative) COC | 0.5 | 88 |

(continued)

| Dose of component (b) | Component (c) | | Herbicidal efficacy on crabgrass (%) |
|---|---|---|---|
| | Name | Concentration (w/v%) | |
| 7.5 g/ha | Polyoxyethylene alkylamine | 0.02 | 90 |
| | | 0.01 | 90 |
| | | 0.005 | 86 |
| | | 0.001 | 82 |
| | Polyoxyethylene hydrogenated castor oil | 0.02 | 92 |
| | | 0.01 | 90 |
| | | 0.005 | 86 |
| | | 0.001 | 83 |
| | Sodium polyoxyethylene alkyl ether phosphate | 0.02 | 93 |
| | | 0.01 | 90 |
| | | 0.005 | 89 |
| | | 0.001 | 82 |
| | (Comparative) MSO | 0.5 | 93 |
| | (Comparative) COC | 0.5 | 89 |

As evident from Table 2, regardless of with or without use of the component (b), a sufficient herbicidal efficacy on the crabgrass to be controlled was showed at all the concentrations of the component (c) tested. Further, also in Test Example 1-2, the minimum concentration of the component (c) required to obtain herbicidal efficacies on the crabgrass equal to those of the 0.5 weight/volume% adjuvant (MSO, COC) recommended for the commercial products was 0.001%. Thus, it was found that herbicidal efficacies on weeds can be secured even if the amount of the component (c) of the present invention used was remarkably reduced from the amount of the conventional adjuvant used.

It was found from the results in Tables 1 and 2 that both practically sufficient safety of the corn and herbicidal efficacies on weeds can be obtained, within the range of the amount of the component (c) used in Test Examples 1-1 and 1-2.

Test Example 2-1

Upland field soil was put into a 1/1,000,000 hectare pot, and seeds of field corn (variety: SNOWDENT SH2933, variety highly susceptible to component (a)) were sown. When the field corn reached 3.0 to 3.1 leaf stage, a WG containing the component (a) (trade name: Accent, manufactured by DuPont), and a WG containing the component (a) and the component (b) (trade name: Accent Q, manufactured by DuPont) were diluted with water (corresponding to 200 L/ha) containing a predetermined amount of the component (c) or as a comparison a modified seed oil (MSO) (trade name: Destiny HC, manufactured by Winfield Solutions, LLC.) or a crop oil concentrate (COC) (trade name: Agri-dex, manufactured by Helena) of which use in combination with the commercial products used in this Test Example is recommended, to prepare spray solutions. The spray solutions were applied to foliage with an automatic boom sprayer (dose of component (a): 120 g/ha, dose of component (b): 0 or 30 g/ha). On the 14th day after the foliar application, the above-ground height of the field corn was measured, and the height ratio was calculated in accordance with the following formula. The above-ground height in the untreated plot was 80.0 cm.

$$\text{Height ratio (\%)} = (\text{above-ground height in the treated plot}) / (\text{above-ground height in the untreated plot}) \times 100$$

The results are shown in Table 3.

Table 3

| Dose of component (b) | Component (c) | | Above-ground height (cm) | Height ratio (%) |
|---|---|---|---|---|
| | Name | Concentration (w/v%) | | |
| 0 g/ha | Polyoxyethylene alkylamine | 0.1 | 19.0 | 24 |
| | | 0.05 | 58.6 | 73 |
| | | 0.03 | 52.9 | 66 |
| | | 0.02 | 61.9 | 77 |
| | Polyoxyethylene hydrogenated castor oil | 0.1 | 39.6 | 50 |
| | | 0.05 | 55.5 | 69 |
| | | 0.03 | 55.4 | 69 |
| | | 0.02 | 57.4 | 72 |
| | Sodium polyoxyethylene alkyl ether phosphate | 0.1 | 37.4 | 47 |
| | | 0.05 | 48.5 | 61 |
| | | 0.03 | 62.6 | 78 |
| | | 0.02 | 78.0 | 98 |
| | (Comparative) MSO | 0.5 | 54.0 | 68 |
| | (Comparative) COC | 0.5 | 57.8 | 72 |
| 30 g/ha | Polyoxyethylene alkylamine | 0.1 | 77.3 | 97 |
| | | 0.05 | 78.0 | 98 |
| | | 0.03 | 82.5 | 103 |
| | | 0.02 | 84.0 | 105 |
| | Polyoxyethylene hydrogenated castor oil | 0.1 | 81.3 | 102 |
| | | 0.05 | 84.4 | 105 |
| | | 0.03 | 82.9 | 104 |
| | | 0.02 | 81.8 | 102 |
| | Sodium polyoxyethylene alkyl ether phosphate | 0.1 | 80.9 | 101 |
| | | 0.05 | 84.3 | 105 |
| | | 0.03 | 82.4 | 103 |
| | | 0.02 | 83.4 | 104 |
| | (Comparative) MSO | 0.5 | 81.6 | 102 |
| | (Comparative) COC | 0.5 | 78.5 | 98 |

As evident from Table 3, in this Test Example also, in the same manner as in Test Example 1-1, it was found that the safety of the corn was secured even if the amount of the component (c) of the present invention used was remarkably reduced from the amount of the conventional adjuvant used. Particularly in this Test Example, it was confirmed that the above-ground height of the corn suppressed by the component (a) was recovered to a level comparable to the untreated plot by addition of the component (b).

Test Example 2-2

Upland field soil was put into a 1/1,000,000 hectare pot, and seeds of crabgrass (Digitaria ciliaris) were sown. When the crabgrass reached 5.3 to 5.8 leaf stage, a WG containing the component (a) (trade name: Accent, manufactured by DuPont) and a WG containing the component (a) and the component (b) (trade name: Accent Q, manufactured by

DuPont) were diluted with water (corresponding to 200 L/ha) containing a predetermined amount of the component (c) or as a comparison a modified seed oil (MSO) (trade name: Destiny HC, manufactured by Winfield Solutions, LLC.) or a crop oil concentrate (COC) (trade name: Agri-dex, manufactured by Helena) of which use in combination with the commercial products used in this Test Example is recommended, to prepare spray solutions. The spray solutions were applied to foliage with an automatic boom sprayer (dose of component (a): 30 g/ha, dose of component (b): 0 or 7.5 g/ha). On the 20th day after the foliar application , the plant growth state was visually observed, and the herbicidal efficacy on the crabgrass was obtained in accordance with the evaluation criteria.

Herbicidal efficacy (%) = 0 (equivalent to the untreated plot) to 100 (completely killed)

The results are shown in Table 4.

Table 4

| Dose of component (b) | Component (c) | | Herbicidal efficacy on crabgrass (%) |
|---|---|---|---|
| | Name | Concentration (w/v%) | |
| 0 g/ha | Polyoxyethylene alkylamine | 0.1 | 91 |
| | | 0.05 | 90 |
| | | 0.03 | 80 |
| | | 0.02 | 65 |
| | Polyoxyethylene hydrogenated castor oil | 0.1 | 89 |
| | | 0.05 | 90 |
| | | 0.03 | 83 |
| | | 0.02 | 65 |
| | Sodium polyoxyethylene alkyl ether phosphate | 0.1 | 84 |
| | | 0.05 | 82 |
| | | 0.03 | 89 |
| | | 0.02 | 73 |
| | (Comparative) MSO | 0.5 | 89 |
| | (Comparative) COC | 0.5 | 72 |

(continued)

| Dose of component (b) | Component (c) | | Herbicidal efficacy on crabgrass (%) |
|---|---|---|---|
| | Name | Concentration (w/v%) | |
| 7.5 g/ha | Polyoxyethylene alkylamine | 0.1 | 85 |
| | | 0.05 | 85 |
| | | 0.03 | 85 |
| | | 0.02 | 82 |
| | Polyoxyethylene hydrogenated castor oil | 0.1 | 85 |
| | | 0.05 | 87 |
| | | 0.03 | 82 |
| | | 0.02 | 70 |
| | Sodium polyoxyethylene alkyl ether phosphate | 0.1 | 80 |
| | | 0.05 | 77 |
| | | 0.03 | 60 |
| | | 0.02 | 73 |
| | (Comparative) MSO | 0.5 | 90 |
| | (Comparative) COC | 0.5 | 73 |

As evident from Table 4, in this Test Example also, in the same manner as in Test Example 1-2, practically sufficient herbicidal efficacies on weeds were confirmed even if the amount of the component (c) of the present invention used was remarkably reduced from the amount of the conventional adjuvant used.

From the results in Tables 3 and 4, it was found that both practically sufficient safety of the corn and herbicidal efficacies on weeds were obtained within the range of the amount of the component (c) used in Test Examples 2-1 and 2-2.

Test Example 3

Upland field soil was put into a 1/1,000,000 hectare pot, and seeds of field corn (variety: SNOWDENT SH2933, variety highly susceptible to component (a)) were sown. When the field corn reached 3.2 to 3.4 leaf stage, a WG containing the component (a) (trade name: Accent, manufactured by DuPont), and a WG containing the component (a) and the component (b) (trade name: Accent Q, manufactured by DuPont) were diluted with water (corresponding to 200 L/ha) containing a predetermined amount of the component (c) or as a comparison a modified seed oil (MSO) (trade name: Destiny HC, manufactured by Winfield Solutions, LLC.) or a crop oil concentrate (COC) (trade name: Agri-dex, manufactured by Helena) of which use in combination with the commercial products used in this Test Example is recommended, to prepare spray solutions. The spray solutions were applied to foliage with an automatic boom sprayer (dose of component (a): 60 g/ha, dose of component (b): 0 or 15 g/ha). On the 14th day after the foliar application, the above-ground height of the field corn was measured, and the height ratio was calculated in accordance with the following formula. The above-ground height in the untreated plot was 68.1 cm.

Height ratio (%) = (above-ground height in the treated plot) / (above-ground height in the untreated plot) × 100

The results are shown in Table 5.

Table 5

| Dose of component (b) | Component (c) Name | Concentration (w/v%) | Above-ground height (cm) | Height ratio (%) |
|---|---|---|---|---|
| 0 g/ha | Polyoxyethylene hydrogenated castor oil | 0.25 | 24.1 | 35 |
| | | 0.2 | 23.9 | 35 |
| | | 0.1 | 44.4 | 65 |
| | Sodium polyoxyethylene alkyl ether phosphate | 0.25 | 23.1 | 34 |
| | | 0.2 | 23.3 | 34 |
| | | 0.1 | 31.0 | 46 |
| | (Comparative) MSO | 0.5 | 53.8 | 79 |
| | (Comparative) COC | 0.5 | 53.1 | 78 |
| 15 g/ha | Polyoxyethylene hydrogenated castor oil | 0.25 | 66.0 | 97 |
| | | 0.2 | 68.4 | 100 |
| | | 0.1 | 68.8 | 101 |
| | Sodium polyoxyethylene alkyl ether phosphate | 0.25 | 67.5 | 99 |
| | | 0.2 | 65.5 | 96 |
| | | 0.1 | 67.8 | 100 |
| | (Comparative) MSO | 0.5 | 70.1 | 103 |
| | (Comparative) COC | 0.5 | 72.5 | 107 |

As evident from Table 5, in this Test Example also, in the same manner as in Test Example 1-1, it was found that the safety of the corn was secured even if the amount of the component (c) used was reduced from the amount of the conventional adjuvant used. In this Test Example, in a case where no component (b) was used, the degree of suppression of the growth of the corn increased as the amount of the component (c) used, however, it was confirmed that by addition of the component (b), the above-ground height of the corn suppressed by the component (a) was recovered to a level comparable to the untreated plot.

The herbicidal efficacies on weeds of the component (c) at various concentrations were not confirmed in Test Example 3. However, as the practically sufficient herbicidal efficacies on weeds were confirmed in Test Examples 1-2 and 2-2, it is expected that practically sufficient herbicidal efficacies on weeds can be obtained at the concentrations of the component (c) in Test Example 3 in which the component (c) was used at higher concentrations than Test Examples 1-2 and 2-2.

Test Example 4

Upland field soil was put into a 1/1,000,000 hectare pot, and seeds of field corn (variety: PIONEERDENT 30N34, variety highly susceptible to component (a)) were sown. When the field corn reached 3.5 to 4.0 leaf stage, an oil-based suspension containing the component (a) and the component (c) (polyoxyethylene hydrogenated castor oil), and a wettable powder containing the component (b) were diluted with water in an amount corresponding to 300 L/ha to prepare spray solutions. The concentration of the component (c) in the spray solution was 0.08 weight/volume percent. The spray solutions were applied to foliage with a small sprayer. On the 14th day after the foliar application, the above-ground height of the field corn was measured, and the height ratio was calculated in accordance with the following formula. The above-ground height in the untreated plot was 75.8 cm.

Height ratio (%) = (above-ground height in the treated plot) / (above-ground height in the untreated plot) × 100

The results are shown in Table 6.

Table 6

| Component (a)/component (b) | | Above-ground height (cm) | Height ratio (%) |
|---|---|---|---|
| Com ponent | Dose (g/ha) | | |
| Component (a) | 120 | 41.3 | 55 |
| Component (a) + component (b) | 120+240 | 61.5 | 81 |
| | 120+120 | 64.9 | 86 |
| | 120+90 | 67.1 | 89 |
| | 120+60 | 62.0 | 82 |
| | 120+30 | 65.6 | 87 |
| | 120+20 | 64.7 | 85 |
| | 120+15 | 64.2 | 85 |
| | 120+10 | 66.7 | 88 |
| | 120+7.5 | 67.5 | 89 |
| | 120+5 | 64.1 | 85 |
| | 120+3.75 | 66.8 | 88 |

Test Example 5

In an agricultural field having seeds of field corn (variety: PIONEERDENT 30N34, variety highly susceptible to component (a)) sown, when the field corn reached 3.1 to 3.5 leaf stage, an oil-based suspension containing the component (a) and the component (c) (polyoxyethylene hydrogenated castor oil), and a wettable powder containing the component (b) were diluted with water in an amount corresponding to 300 L/ha to prepare spray solutions, which were applied to foliage with a Teejet 80015VS nozzle. The concentration of the component (c) in the spray solution was 0.020 weight/volume percent. On the 14th day after the foliar application,, the above-ground height of the field corn was measured, and the height ratio was calculated in accordance with the following formula. The above-ground height in the untreated plot was 76.7 cm.

$$\text{Height ratio (\%)} = (\text{above-ground height in the treated plot}) / (\text{above-ground height in the untreated plot}) \times 100$$

The results are shown in Table 7.

Table 7

| Component (a)/component (b) | | Above-ground height (cm) | Height ratio (%) |
|---|---|---|---|
| Com ponent | Dose (g/ha) | | |
| Component (a) | 30 | 66.6 | 87 |
| Component (a) + component (b) | 30+7.5 | 76.2 | 99 |
| | 30+3.75 | 79.8 | 104 |
| | 30+1.875 | 76.9 | 100 |
| | 30+0.9375 | 74.8 | 98 |

Test Example 6

Upland field soil was put into a 1/1,000,000 hectare pot, and seeds of field corn (variety: SNOWDENT SH2933, variety highly susceptible to component (a)) were sown. When the field corn reached 3.1 to 3.5 leaf stage, an oil-based suspension containing the component (a) and the component (c) (sodium polyoxyethylene alkyl ether phosphate) and a water-based suspension containing the component (b) were diluted with water in an amount corresponding to 300 L/ha to prepare spray solutions, which were applied to foliage with an automatic boom sprayer. The concentration of the component (c) in the spray solution was 0.033 weight/volume percent. On the 14th day after the foliar application ,, the above-ground height of the field corn was measured, and the height ratio was calculated in accordance with the following formula. The above-ground height in the untreated plot was 62.2 cm.

$$\text{Height ratio (\%)} = (\text{above-ground height in the treated plot}) / (\text{above-ground height in the untreated plot}) \times 100$$

The results are shown in Table 8.

Table 8

| Component (a)/component (b) | | Above-ground height (cm) | Height ratio (%) |
|---|---|---|---|
| Com ponent | Dose (g/ha) | | |
| Component (a) | 30 | 46.8 | 75 |
| Component (a) + component (b) | 30+7.5 | 68.1 | 110 |
| | 30+3.75 | 64.4 | 103 |
| | 30+1.875 | 60.4 | 97 |
| | 30+0.9375 | 55.5 | 89 |

Test Example 7

In an agricultural field having seeds of field corn (variety: SNOWDENT SH2933, variety highly susceptible to component (a)) sown, when the field corn reached 3.2 to 4.0 leaf stage, an oil-based suspension containing the component (a), the component (b) and the component (c) (polyoxyethylene hydrogenated castor oil) was diluted with water in an amount corresponding to 200 L/ha to prepare spray solutions, which were applied to foliage with a Teejet 8001VS nozzle. As a comparison, an oil-based suspension containing the component (a) and the component (c) (polyoxyethylene hydrogenated castor oil) was used. On the 27th day after the foliar application, the above-ground height of the field corn was measured, and the height ratio was calculated in accordance with the following formula. The above-ground height in the untreated plot was 146.7 cm.

$$\text{Height ratio (\%)} = (\text{above-ground height in the treated plot}) / (\text{above-ground height in the untreated plot}) \times 100$$

The results are shown in Table 9.

Table 9

| Component (a)/component (b) | | Concentration of component (c) (w/v%) | Above-ground height (cm) | Height ratio (%) |
|---|---|---|---|---|
| Com ponent | Dose (g/ha) | | | |
| Component (a) | 120 | 0.12 | 107.4 | 73 |
| | 80 | 0.08 | 110.7 | 75 |
| | 60 | 0.06 | 122.3 | 83 |
| | 40 | 0.04 | 129.9 | 88 |
| | 30 | 0.03 | 124.0 | 84 |
| | 20 | 0.02 | 125.5 | 86 |
| Component (a) + component (b) | 120+30 | 0.12 | 137.4 | 94 |
| | 80+20 | 0.08 | 149.9 | 102 |
| | 60+15 | 0.06 | 143.6 | 98 |
| | 40+10 | 0.04 | 141.2 | 96 |
| | 30+7.5 | 0.03 | 141.2 | 96 |
| | 20+5 | 0.02 | 142.1 | 97 |

Test Example 8

In an agricultural field having seeds of field corn (variety: SNOWDENT SH2933, variety highly susceptible to component (a)) sown, when the field corn reached 3.1 to 3.3 leaf stage, an oil-based suspension containing the component (a), the component (b) and the component (c) (sodium polyoxyethylene alkyl ether phosphate) was diluted with water in an amount corresponding to 500 L/ha to prepare spray solutions, which were applied to foliage with a Teejet 80015VS nozzle. As a comparison, an oil-based suspension containing the component (a) and the component (c) (sodium polyoxyethylene alkyl ether phosphate) was used. On the 28th day after the foliar application , the above-ground height of the field corn was measured, and the height ratio was calculated in accordance with the following formula. The above-ground height in the untreated plot was 132.7 cm.

$$\text{Height ratio (\%)} = \text{(above-ground height in the treated plot)} / \text{(above-ground height in the untreated plot)} \times 100$$

The results are shown in Table 10.

Table 10

| Component (a)/component (b) | | Concentration of component (c) (w/v%) | Above-ground height (cm) | Height ratio (%) |
|---|---|---|---|---|
| Com ponent | Dose (g/ha) | | | |
| Component (a) | 120 | 0.08 | 86.3 | 65 |
| | 90 | 0.06 | 88.6 | 67 |
| | 60 | 0.04 | 107.2 | 81 |
| Component (a) + component (b) | 120+30 | 0.08 | 119.1 | 90 |
| | 90+22.5 | 0.06 | 128.6 | 97 |
| | 60+15 | 0.04 | 133.0 | 100 |

Test Example 9

In a field corn agricultural field having seeds of barnyardgrass (Echinochloa crusgalli L.), giant foxtail (Setaria faberi Herrm.), crabgrass (Digitaria ciliaris), black nightshade (Solanum nigrum L.), pale smartweed (Persicaria lapathifolia(L.)Delarbre var. lapathifolia), and threeseeded copperleaf (Acalypha australis L.) sown, when the field corn reached 6 leaf stage, an oil-based suspension containing the component (a), the component (b) and the component (c) (polyoxyethylene hydrogenated castor oil) was diluted with water in an amount corresponding to 200 L/ha to prepare spray solutions, which were applied to foliage with a Teejet 8001VS nozzle. The concentration of the component (c) in the spray solution was 0.040 weight/volume percent. The leaf stage and the height at the time of foliar application of each weed are shown in Table 11. On the 31st day after the foliar application , the growth state of each weed was visually observed, and the herbicidal efficacy was obtained in accordance with the evaluation criteria.

Herbicidal efficacy (%) = 0 (equivalent to the untreated plot) to 100 (completely killed)

The results are shown in Table 12.

Table 11

| Weeds | Leaf stage at foliar application (height) |
|---|---|
| Barnyardgrass (Echinochloa crus-galli L.) | 3.5-5.1L (10-18 cm) |
| Giant foxtail (Setaria faberi Herrm.) | 3.3-4.5L (7-12 cm) |
| Crabgrass (Digitaria ciliaris) | 4.0-5.2L (3-6 cm) |
| Black nightshade (Solanum nigrum L.) | 1.2-2.5L (2-3 cm) |
| Pale smartweed (Persicaria lapathifolia(L.)Delarbre var. lapathifolia) | 3.0-4.0L (3-8 cm) |
| Threeseeded copperleaf (Acalypha australis L.) | 2.0-3.0L (2-5 cm) |

Table 12

| Component (a) /component (b) | | Herbicidal efficacy (%) | | | | | |
|---|---|---|---|---|---|---|---|
| Com ponent | Dose (g/ha) | Barnyardgrass | Giant foxtail | Crabgrass | Black nightshade | Pale smartweed | Threeseeded copperleaf |
| Com ponent (a) + component (b) | 40+10 | 100 | 100 | 84 | 93 | 100 | 98 |

Test Example 10

In a field corn agricultural field having seeds of goosegrass (Eleusine indica L.), barnyardgrass (Echinochloa crus-galli L.), Millet (Panicum Miliaceum L.), giant foxtail (Setaria faberi Herrm.), crabgrass (Digitaria ciliaris), black nightshade (Solanum nigrum L.), pale smartweed (Persicaria lapathifolia(L.)Delarbre var. lapathifolia), and threeseeded copperleaf (Acalypha australis L.) sown, when the field corn reached 5 leaf stage, an oil-based suspension containing the component (a), the component (b) and the component (c) (sodium polyoxyethylene alkyl ether phosphate) was diluted with water in an amount corresponding to 500 L/ha to prepare spray solutions, which were applied to foliage with a Teejet 80015VS nozzle. The concentration of the component (c) in the spray solution was 0.020 weight/volume percent. The leaf stage and the height at the time of foliar application of each weed are shown in Table 13. On the 28th day after the foliar application, the growth state of each weed was visually observed, and the herbicidal efficacy was obtained in accordance with the evaluation criteria.

Herbicidal efficacy (%) = 0 (equivalent to the untreated plot) to 100 (completely killed)

The results are shown in Table 14.

Table 13

| Weeds | Leaf stage at foliar application (height) |
|---|---|
| Goosegrass (Eleusine indica L.)) | 5.5-6.3L (3-5 cm) |
| Barnyardgrass (Echinochloa crus-galli L.) | 4.0-5.0L (9-12 cm) |
| Millet (Panicum Miliaceum L.) | 5.0-5.3L (11-19 cm) |
| Giant foxtail (Setaria faberi Herrm.) | 3.5-4.1L (5-10 cm) |
| Crabgrass (Digitaria ciliaris) | 3.1-4.0L (4-5 cm) |
| Black nightshade (Solanum nigrum L.) | 1.8-2.0L (2.5-4.5 cm) |
| Pale smartweed (Persicaria lapathifolia(L.)Delarbre var. lapathifolia)) | 2.0-2.3L (4-5 cm) |
| Threeseeded copperleaf (Acalypha australis L.) | 0.5-1.0L (1.5-2.5 cm) |

Table 14

| Component (a) /component (b) | | Herbicidal efficacy (%) | | | | | | | |
|---|---|---|---|---|---|---|---|---|---|
| Component | Dose (g/ha) | Goosegrass | Barn-yard-grass | Millet | Giant foxtail | Crabgrass | Black nightshade | Pale smartweed | Threeseeded copperleaf |
| Component (a) + Component (b) | 30+ 7.5 | 93 | 100 | 97 | 100 | 93 | 100 | 100 | 100 |

From the results in Test Examples 4 to 10, it was found that the safety of the corn was secured at various doses of the component (a) and the component (b) by using the component (c) at the concentrations at which the effectivity was confirmed in Test Examples 1 to 3. In the same manner as in Test Examples 4 to 6 in which the agricultural formulation containing the component (a) and the component (c) and the agricultural formulation containing the component (b) were used to prepare spray solutions, the effects of the present invention were obtained also in Test Examples 7 to 10 in which the agricultural formulation containing the component (a), the component (b) and the component (c) was used to prepare spray solutions. As described above, since the effects of the present invention are exhibited by the spray solution containing the component (a), the component (b) and the component (c), the agricultural formulation to be used for preparation of the spray solution is not particularly limited, however, from the viewpoint of convenience to users, it is preferred to use an agricultural formulation containing the component (a), the component (b) and the component (c).

Test Example 11

Upland field soil was put into a 1/1,000,000 hectare pot, and seeds of field corn (variety: SNOWDENT SH2933, variety highly susceptible to component (a)) were sown. When the field corn reached 3.0 to 3.2 leaf stage, a suspension containing the component (a) and the component (c) and a wettable powder containing the component (b) were diluted with water in an amount corresponding to 200 L/ha to prepare spray solutions. The concentration of the component (c) in the spray solution was 0.15 weight/volume percent. The spray solutions were applied to foliage with an automatic boom sprayer. On the 7th day after the foliar application, the above-ground height of the field corn was measured, and the height ratio was calculated in accordance with the following formula. The above-ground height in the untreated plot was 66.0 cm.

$$\text{Height ratio (\%)} = (\text{above-ground height in the treated plot}) / (\text{above-ground height in the untreated plot}) \times 100$$

The results are shown in Table 15.

Table 15

| Dose of component (a) (g/ha) | Dose of component (b) (g/ha) | Component (c) | | Above-ground height (cm) | Height ratio (%) |
|---|---|---|---|---|---|
| | | Name | Concentration (w/v%) | | |
| 120 | 0 | Polyoxyethylene sorbitan fatty acid ester | 0.15 | 32.6 | 49 |
| | | Polyoxyethylene alkyl ether | 0.15 | 42.0 | 64 |
| | 30 | Polyoxyethylene sorbitan fatty acid ester | 0.15 | 57.8 | 88 |
| | | Polyoxyethylene alkyl ether | 0.15 | 61.5 | 93 |

As evident from Table 15, in this Test Example also, in the same manner as in Test Example 3, it was found that the safety of the corn was secured.

Formulation Example

As examples of the formulation to be used in the method of the present invention, Formulation Examples for oil-based suspensions are shown below. however, the agricultural formulation of the present invention is not limited thereto. Numerical values in Tables represent part by weight.

Table 16

| Component | | No. | | | | | |
|---|---|---|---|---|---|---|---|
| | | 1 | 2 | 3 | 4 | 5 | 6 |
| (a) | Nicosulfuron | 4 | 4 | 4 | 4 | 4 | 4 |
| (b) | Isoxadifen-ethyl | 1 | 1 | 1 | 1 | 1 | 1 |
| (c) | Polyoxyethylene alkyl ether phosphate | 10 | | | | | |
| (c) | Polyoxyethylene alkylamine | | 10 | | | | |
| (c) | Polyoxyethylene sorbitan fatty acid ester | | | 10 | | | |
| (c) | Polyoxyethylene alkyl ether | | | | 10 | | |
| (c) | Polyoxyethylene hydrogenated castor oil | | | | | 10 | |
| (c) | Polyoxyethylene castor oil | | | | | | 10 |
| Additive | Sorbitan fatty acid ester | 3 | 3 | 3 | 3 | 3 | 3 |
| Additive | Organic bentonite | 0.5 | 0.5 | 0.5 | 0.5 | 0.5 | 0.5 |
| Additive | Corn oil | 81.5 | 81.5 | 81.5 | 81.5 | 81.5 | 81.5 |

Table 17

| Component | | No. | | | | | |
|---|---|---|---|---|---|---|---|
| | | 7 | 8 | 9 | 10 | 11 | 12 |
| (a) | Nicosulfuron | 6 | 6 | 6 | 6 | 6 | 6 |
| (b) | Isoxadifen-ethyl | 1.5 | 1.5 | 1.5 | 1.5 | 1.5 | 1.5 |
| (c) | Polyoxyethylene alkyl ether phosphate | 20 | | | | | |
| (c) | Polyoxyethylene alkylamine | | 20 | | | | |
| (c) | Polyoxyethylene sorbitan fatty acid ester | | | 20 | | | |
| (c) | Polyoxyethylene alkyl ether | | | | 20 | | |
| (c) | Polyoxyethylene hydrogenated castor oil | | | | | 20 | |
| (c) | Polyoxyethylene castor oil | | | | | | 20 |
| Additive | Sorbitan fatty acid ester | 3 | 3 | 3 | 3 | 3 | 3 |
| Additive | Organic bentonite | 0.5 | 0.5 | 0.5 | 0.5 | 0.5 | 0.5 |
| Additive | Ester of rapeseed oil | 69 | 69 | 69 | 69 | 69 | 69 |

Table 18

| Component | | No. | | | | |
|---|---|---|---|---|---|---|
| | | 13 | 14 | 15 | 16 | 17 |
| (a) | Nicosulfuron | 4 | 4 | 4 | 4 | 4 |
| (b) | Isoxadifen-ethyl | 1 | 1 | 1 | | |
| (c) | Polyoxyethylene alkyl ether phosphate | | | | | |
| (c) | Polyoxyethylene alkylamine | 5 | | | | |
| (c) | Polyoxyethylene sorbitan fatty acid ester | | | | | |
| (c) | Polyoxyethylene alkyl ether | | | | | |

(continued)

| Component | | No. | | | | |
|---|---|---|---|---|---|---|
| | | 13 | 14 | 15 | 16 | 17 |
| (c) | Polyoxyethylene hydrogenated castor oil | 5 | 5 | | 10 | |
| (c) | Polyoxyethylene castor oil | | 5 | | | |
| Additive | Sorbitan fatty acid ester | 3 | 3 | 3 | 3 | 3 |
| Additive | Organic bentonite | 0.5 | 0.5 | 0.5 | 0.5 | 0.5 |
| Additive | Corn oil | 81.5 | 81.5 | 91.5 | 82.5 | 92.5 |

In Formulation Examples shown in Tables 16 to 18, the particle size of the solid component containing the component (a) is preferably from 3.0 to 5.0 μm by the volume average size. In order to obtain a formulation in such a size, it is preferred to ground a mixture of the components (a) to (c) and the additives by a wet grinding machine such as a bead mill so that the particle size of the solid component containing the component (a) is within the above range. In the case of an agricultural formulation containing no component (b) and/or component (c) as in Formulation Examples No.15 to 17, the component (b) and/or the component (c) may be mixed in a tank at the time of preparation of the spray solution to prepare a spray solution.

The entire disclosure of Japanese Patent Application No. 2019-237589 filed on December 27, 2019 including specification, claims and abstract is incorporated herein by reference in its entirety.

## Claims

**1.** A method which brings benefits to the health and/or growth of useful plants, which comprises:

(1) a step of preparing a spray solution containing at least

(a) nicosulfuron,
(b) isoxadifen-ethyl,
(c) one or more components selected from the group consisting of a polyoxyethylene alkyl ether phosphate or its salt, a polyoxyethylene alkylamine, a polyoxyethylene sorbitan fatty acid ester, a polyoxyethylene alkyl ether, a polyoxyethylene hydrogenated castor oil and a polyoxyethylene castor oil, and
(d) water,

so that the concentration of the component (c) in the spray solution is from 0.001 to 0.25 weight/volume percent; and
(2) a step of applying the spray solution prepared in the step (1) to useful plants or to a place where they grow.

**2.** The method according to Claim 1, wherein the useful plants are corn.

**3.** The method according to Claim 1 or 2, wherein the spray solution is applied in an application amount of from 100 to 1,000 L/ha.

**4.** The method according to any one of Claims 1 to 3, wherein the spray solution prepared in the step (1) further contains (e) one or more components selected from fertilizers and plant growth regulators, and/or (f) one or more components selected from other agriculturally active ingredients.

**5.** An agricultural formulation to be used for the method as defined in any one of Claims 1 to 4, comprising

(a) nicosulfuron,
(b) isoxadifen-ethyl, and
(c) one or more components selected from the group consisting of a polyoxyethylene alkyl ether phosphate or its salt, a polyoxyethylene alkylamine, a polyoxyethylene sorbitan fatty acid ester, a polyoxyethylene alkyl ether, a polyoxyethylene hydrogenated castor oil and a polyoxyethylene castor oil.

## INTERNATIONAL SEARCH REPORT

International application No.
PCT/JP2020/046361

**A. CLASSIFICATION OF SUBJECT MATTER**

Int.Cl. A01P13/00(2006.01)i, A01N43/80(2006.01)i, A01N25/30(2006.01)i, A01N47/36(2006.01)i
FI: A01N47/36101A, A01N43/80101, A01P13/00, A01N25/30

According to International Patent Classification (IPC) or to both national classification and IPC

**B. FIELDS SEARCHED**

Minimum documentation searched (classification system followed by classification symbols)
Int.Cl. A01P13/00, A01N47/36, A01N25/30, A01N43/80

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2019/0124925 A1 (QINGDAO KINGAGROOT RESISTANT WEED MANAGEMENT CO., LTD.) 02 May 2019 (2019-05-02), paragraphs [0076]-[0078] | 5<br>1-5 |
| Y | JP 2007-284422 A (ISHIHARA SANGYO KAISHA) 01 November 2007 (2007-11-01), claims, paragraphs [0004]-[0007], test examples | 1-5 |
| Y | JP 2005-60369 A (ISHIHARA SANGYO KAISHA) 10 March 2005 (2005-03-10), claims, paragraphs [0005]-[0008], test examples | 1-5 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 February 2021 | 16 February 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/046361

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-508294 A (BAYER CROPSCIENCE GMBH) 18 March 2004 (2004-03-18), claims, paragraphs [0001], [0002], table 1, examples | 1-5 |
| A | JP 2008-523150 A (BAYER CROPSCIENCE LP) 03 July 2008 (2008-07-03), entire text | 1-5 |

Form PCT/ISA/210 (second sheet) (January 2015)

**INTERNATIONAL SEARCH REPORT**
Information on patent family members

International application No.
PCT/JP2020/046361

| | | |
|---|---|---|
| US 2019/0124925 A1 | 02 May 2019 | WO 2017/177784 A1<br>CN 105831123 A |
| JP 2007-284422 A | 01 November 2007 | US 2009/0170702 A1<br>claims, paragraphs [0005]-[0008], test examples<br>WO 2007/119435 A1<br>EP 1998622 A1<br>KR 10-2008-0102230 A<br>CN 101404888 A |
| JP 2005-60369 A | 10 March 2005 | US 2006/0154824 A1<br>claims, paragraphs [0006], [0007], test examples<br>US 8575067 B2<br>WO 2005/009132 A1<br>EP 1651042 A1<br>CN 1829440 A |
| JP 2004-508294 A | 18 March 2004 | US 2002/0091066 A1<br>claims, paragraphs [0001]-[0004], table 1, examples<br>WO 2001/097615 A2<br>EP 1303188 A2<br>CN 1489437 A |
| JP 2008-523150 A | 03 July 2008 | US 2008/0132415 A1<br>WO 2006/065815 A1<br>EP 1827112 A1<br>KR 10-2007-0102486 A<br>CN 101076255 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 105875602 A
- JP 2019237589 A


### Non-patent literature cited in the description


- **DUPONT.** *DuPont Accent Q herbicide,* 18 December 2019, https://s3-us-west-1.amazonaws.com/www.agrian.com/pdfs/DuPont_Accent_Q_Herbicide_Label1a.pdf